# EUROPEAN PATENT APPLICATION

(11) **EP 1 197 447 A1**
(43) Date of publication of application: **17.04.2002**
(21) Application number: 00308996.8
(22) Date of filing: 12.10.2000
(51) Int. Cl.: B65G 1/04, B65G 1/14, B65D 88/52, B65D 19/12

(54) **A stillage**

(71) Applicant: Boal UK Ltd, Shepsed, Loughborough LE12 9BS (GB)
(72) Inventor: Boers, Marinus, 2610 Wilrijk, Antwerp (BE)
(74) Representative: Powell, Timothy John

(57) **Abstract**

A stillage (10) includes a support surface (12) and a pair of barrier members (13). The barrier members (13) are hingeable from a first position, in which they may lie generally parallel to or below the support surface (12); to a second position in which they are upstanding thereto. A lock (16) permits selective securing of the barrier members (13) in their upstanding position.

## Description

This invention relates to a stillage.

Stillages typically are used to support elongate, self-supporting articles such as extruded metal profiles, drain pipes, guttering, rods and bars.

Stillages have two main functions:
1. The transportation and temporary storage of such substantially self-supporting articles (herein referred to generically as "profiles") in factories and in stockholders' yards; and
2. Transfer of such self-supporting articles from factories and yards to the premises of purchasers of the articles, eg. in road-going trucks or railcars.

A known stillage comprises an array of timber members formed into a U-shaped member. A plurality of such members typically is located at intervals along an array of profiles to be stored/transported. Tension banding is then applied using a tension banding station or a mobile tension banding machine, in order to bind the array of profiles and the stillages together.

The timber stillages suffer several disadvantages, as follows:
1. The timber members tend to separate from one another or split under the pressure of the tension banding. This leads to potentially dangerous accidents during transportation and handling of the packs of profiles secured to the stillages;
2. Damaged timber stillages tend to damage the finish of the profiles supported therein; and
3. Purchasers of the profiles tend to regard the timber stillages as waste items fit only for disposal. Therefore the timber stillages are only rarely re-used.

As an alternative to timber stillages it is known to provide rigid, elongate metal trays whose function is the supporting of an array of the profiles.

The trays have comparatively squat, upstanding side walls to which are attachable wall extension members to define the space occupied by the array of profiles before the application of tension banding.

An array of profiles tension band-secured into such a rigid tray is a robust pack, but the rigid trays nonetheless suffer numerous disadvantages as well. These include:
1. The cost of the rigid trays is high, since each must be fabricated (in practice welded) from sheet metal;
2. Purchasers of the profiles tend not to return the trays to the profile manufacturers. Consequently the profile manufacturers must "back load" their transport vehicles with empty stillages in order to recover them from customers. However, the rigid nature of the metal trays means that such transportation is not space-efficient;
3. The trays are comparatively heavy, and require at least two people to lift them.

Consequently there is a need for an improved stillage.

According to a first aspect of the invention there is provided a stillage comprising: a support having a support surface for supporting articles; a respective barrier member, defining a confinement surface, moveably secured at either end of the support, each said barrier member being moveable between a first position, in which it lies distant from the other said barrier member; and a second position, in which it is upstanding relative to the support and juxtaposed to the other said barrier member; and a lock for selectively locking each barrier member in the upstanding position to define a stillage.

This stillage exhibits numerous advantages over the prior art arrangements.

In particular it may be short compared with the lengths of the profiles to be supported thereby. This means that it is comparatively light, being easily manually liftable by one person. This in turn means that a large number of the stillages may be transported when empty (eg. following collection by a profile manufacturer from a customer).

The lightness and generally small size of the stillage means that even if the customer fails to return it the loss to the profile manufacturer is not great, compared with loss of one of the prior art rigid trays.

The presence of barrier members moveable between a position in which they lie eg. essentially parallel to the support; and an operative position, in which they define the U-shape of the stillage, means that after use to deliver profiles the stillage may be collapsed to a substantially flat configuration. This in turn means that any back loading operations aimed at recovering stillages from customers are efficient.

The stillage, including a pair of barrier members secured to a support member, lends itself to production by extrusion of metals, eg. aluminium. Consequently it is possible for an aluminium profile manufacturer to manufacture its own stillages according to the invention. As a result the profile manufacturer may maintain a ready supply of the stillages. In turn this makes possible a commercial arrangement in which the profile manufacturer bills his customer for the cost of the stillages. The customer then has the option of selling the stillages for scrap value; or of returning the stillages to the profile manufacturer, in either case recovering the cost of the stillages.

Preferably each barrier member is secured to the support by a hinge including two mutually engaged hinge members, one of the said hinge members being secured on the support and the other being secured on a said barrier member.

More specifically the respective hinge members include a hollow sleeve having a hinge pin therein, the hollow interior of the sleeve being of generally keyhole shaped cross section and the cross section of the pin being such as to permit:
(i) its rotation in the wider portion of the keyhole to allow movement of the associated barrier member between the first and second positions; and
(ii) its sliding without rotation in the narrower portion of the keyhole to lock the associated barrier member in its upstanding position.

This arrangement permits an advantageously simple erecting action of the barrier members.

The barrier members may be rotated from their first positions (lying generally parallel to the support) to upstanding positions; and then slid eg. upwardly to cause engagement of the hinge pin in the narrower part of the keyhole profile interior of the hinge sleeve to prevent the barrier members from rotating back to their first positions.

Orientation of the keyhole section of the hollow interior of the hinge sleeve, such that the locking action of the barrier members involves upward movement thereof, is advantageous because it is common practice to lift a pack of profiles after its securing in the stillage. Lifting of the pack by the barrier members automatically raises the barrier members relative to the support member. Consequently the barrier members are locked relative to the support member during suspension and carrying of the stillage.

In particularly preferred embodiments of the invention the hinge pin is of generally rectangular cross section, the shorter sides of the rectangle being convexly radiused to permit rotation of the hinge pin in the wider portion of the said keyhole and the separation of the longer sides of the rectangle from one another permitting sliding of the hinge pin without rotation in the narrower portion of the said keyhole.

This profile of hinge pin is highly effective in permitting selective rotation and locking of the barrier members relative to the support member, in the manner as aforesaid.

Conveniently each said hollow sleeve is rigidly secured to the support; and each said hinge pin is rigidly secured to a said barrier member. This simplifies the construction of the stillage.

Preferably an underside of each hinge sleeve includes a recess for receiving a projection formed on a barrier member of a further said stillage, whereby a plurality of the stillages are stackable one above another when their barrier members are upstanding from the associated support members.

In addition it is preferable that each said barrier member includes a projection for engaging a recess formed in the underside of a further said stillage whereby to facilitate further such stacking.

The foregoing features advantageously allow the vertical stacking of packs of profiles supported in the stillages.

In a particularly preferred embodiment the projection includes a hoop defined by an elongate member having mutually juxtaposed ends that are secured to a said barrier member.

The formation of the projection as a hoop allows it to be a dual purpose component that permits both stacking of the stillages one above another; and lifting of the stillages by virtue of engagement of hoist or crane hooks in each said hoop.

The components of the stillage, and more specifically the support member and the barrier members, preferably are shaped to permit stacking of a plurality of the stillages one above another when the barrier members occupy their respective first positions.

This feature advantageously permits transportation of a large number of the empty stillages at a time.

Each barrier member of the stillage may optionally include secured thereto a tensioning member for engagement by tension banding during assembly of the stillage into a pack of articles supported thereby.

The presents of the tensioning member permits construction of the barrier members as rigid yet light frameworks having interstices between the members defining them. The presence of the tensioning members prevents the tension banding from becoming slack in the interstices between the members.

Conveniently the support and, optionally, the confinement surface of the stillage includes secured thereto one or more resiliently deformable pads.

Such pads help to minimise damage to profiles, in a said pack of profiles, that lie in contact with the surfaces.

When the components of the stillage are manufactured as aluminium extrusions, one or more channels for securing of such resiliently deformable members (that may in preferred embodiments themselves be extruded, rubberised profiles) may be extruded in the support and confinement surfaces, thereby facilitating installation and/or replacement of the resiliently deformable members.

The invention is also considered to reside in a pack of elongate, self-supporting articles comprising at least one stillage, as defined herein, supporting an array of elongate, self-supporting articles lying adjacent one another each barrier member of the stillage being locked in its second, upstanding position; and, optionally, a tension band encircling the stillage and the articles supported thereby to secure the stillage and the articles together.

The pack of the invention is convenient to handle yet it provides good protection for the profiles supported thereby.

Optionally the pack may include a discrete panel (eg. of timber) interposed between an upper face of the array and the tension band.

Such a discrete panel further protects the array of articles against damage by the tension band.

When the tension band and tensioning member are present in one or more of the barrier members of a stillage forming part of a pack according to the invention, the tension band preferably engages the tensioning member to minimise the risk of slackening of the tension band.

According to a further aspect of the invention there is provided a method of packing a plurality of elongate, self-supporting articles comprising the steps of:
(i) erecting the barrier members, of a stillage as defined herein, to their second, upstanding position;
(ii) placing a plurality of said articles between the said barrier members to define an array supported on the support and confined between the barrier members; and, optionally,
(iii) encircling the stillage and the articles therein with at least one tension band to secure the array and the stillage together.

The method of the invention advantageously makes use of a plurality of stillages each according to the invention, to support elongate profiles up to many metres in length.

Preferably the method includes the sub-step of interposing a discrete panel between an upper face of the array and the tension band. A further option of the method is the sub-step of engaging the tension band with at least one said tensioning member (if present).

There now follows a description of preferred embodiments of the invention, by way of non-limiting example, with reference being made to the accompanying drawings in which:
Figure 1 is an end elevational view of a stillage, according to the invention, with its barrier members in their second, upstanding positions;
Figure 2 is a plan view from above of one end of the stillage of Figure 1, viewed on arrows 2-2;
Figures 3a to 3d show erection of a barrier member of a stillage according to the invention from its first to its second position;
Figure 4 shows in cross section a pack of profiles supported in a stillage according to the invention;
Figure 5 is an end elevational view of a pair of packs each as shown in Figure 4, stacked one above another; and

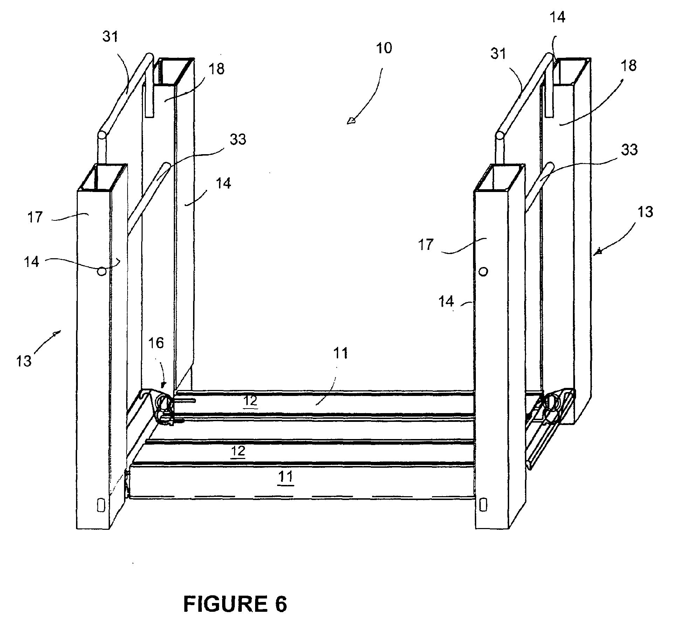

Figure 6 is a perspective view of the stillage of Figure 1.

Referring to the drawings there is shown a stillage 10 according to the invention.

Stillage 10 includes a support member 11 that in use of the stillage extends generally horizontally.

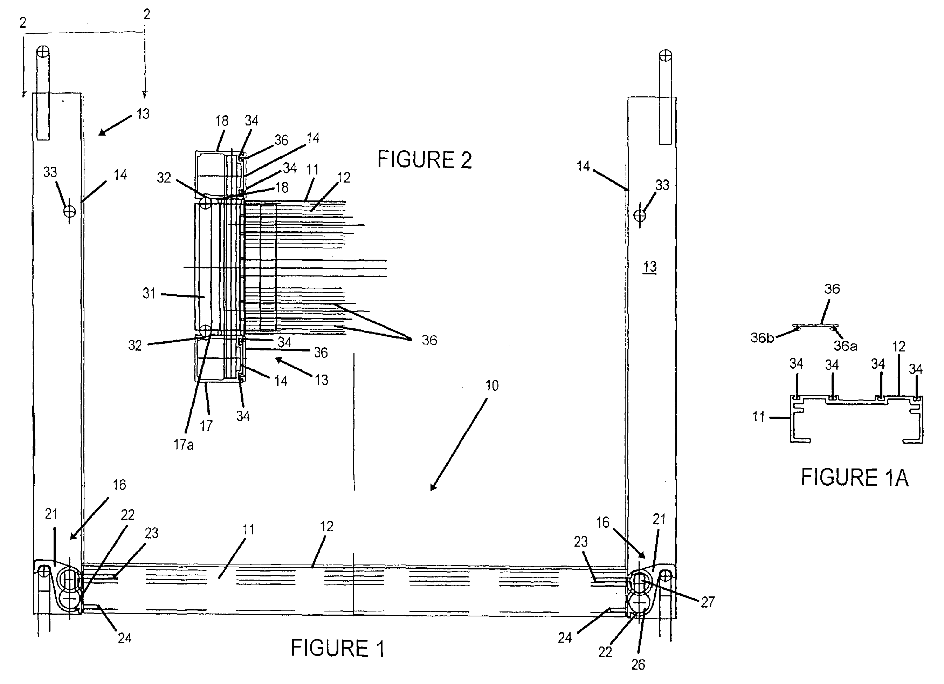

In the embodiment shown member 11 is formed as an aluminium extrusion having the profile visible in Figure 1a, although virtually any member that presents a substantially horizontal upper, support surface 12 may alternatively be employed.

At either end of support member 11 there is provided a barrier member 13 defining at least one confinement surface 14.

A said barrier member 13 is moveably secured at either end of the support member 11 and is moveable between a first position, in which the barrier 13 lies distant from the other said barrier member; and a second position as shown, in which the barrier member 13 is upstanding relative to the support member 11.

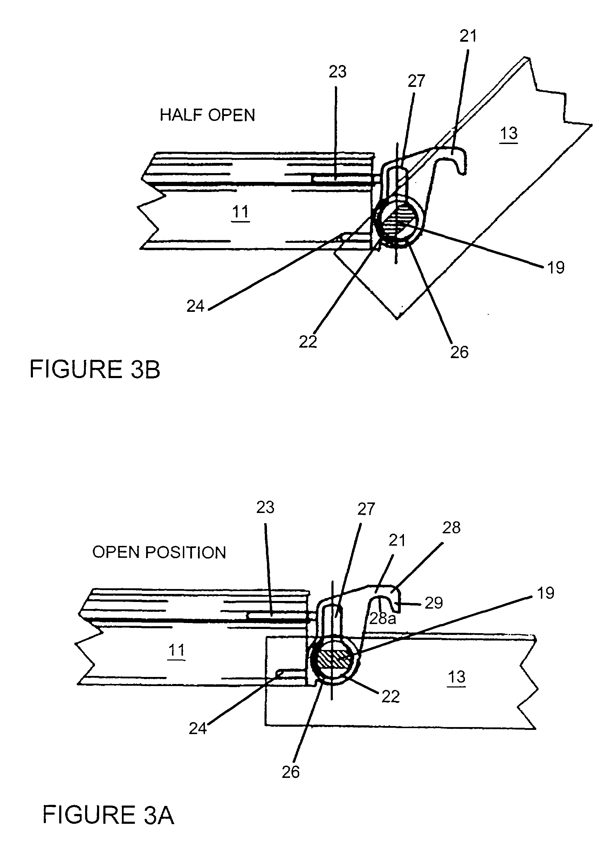

In Figure 3A the first position of barrier member 13 is shown as being generally parallel to support member 11. However this is primarily because in Figure 3A the stillage 10 is standing on level ground. If the stillage 10 were raised the free end of barrier member 13 would drop below the level of support member 11.

Each barrier member 13 is secured to the support member 11 by a hinge (described in more detail below) including a lock 16 for selectively locking each barrier member 13 in the upstanding position to define the generally U-shaped stillage shown in the drawings.

As best shown in Figure 2, each barrier member 13 is defined by a pair of mutually spaced leg members 17, 18 that are secured together at either end to define the barrier member.

As shown each leg member 17, 18 may in preferred embodiments be constituted by an extruded, aluminium box section (Figure 2) although a great variety of other constructions is possible.

At the lowermost end of each barrier member 13, the leg members 17, 18 are rigidly secured together by a pin 19 constituting one of a pair of hinge members defining the aforesaid hinge.

The other said hinge member is constituted by a hinge sleeve 21 (described in more detail below) having a hollow interior within which hinge pin 19 is moveably contained.

Hinge sleeve 21 is secured to support member 11. Since hinge pin 19 lies within the interior of hinge sleeve 21, and since hinge pin 19 interconnects the leg members 17, 18 of barrier member 13, as a result barrier member 13 is moveably captive relative to support member 11.

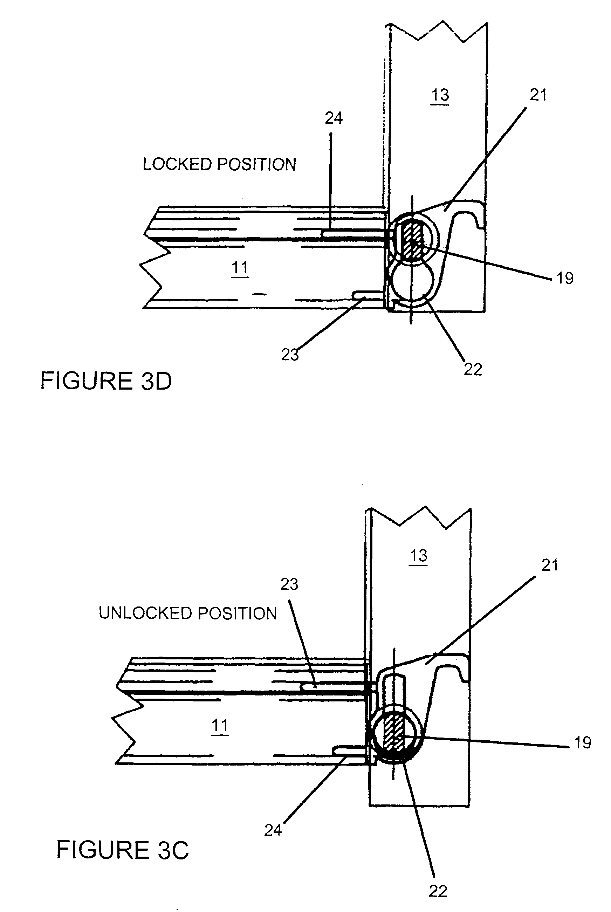

As best seen in Figures 1 and 3, hinge sleeve 21 is an elongate, hollow member (that may if desired be extruded aluminium) having a keyhole shaped aperture 22 extending along the length thereof.

Hinge sleeve 21 has protruding from one exterior side thereof a pair of securing flanges 23, 24 by means of which hinge sleeve 21 is secured to support member 11 eg. by welding.

When so secured the preferred orientation of the keyhole section aperture 22 is as shown, ie. with the wider (substantially circular) part 26 of the aperture beneath the narrower (substantially rectangular) part 27.

The hinge pin 19 of each barrier member 13 is essentially of rectangular cross section, the length of the rectangle being approximately the same as the diameter of the wider portion 26 of the keyhole aperture 22.

The shorter sides of the rectangular profile of hinge 19 are convexly radiused to approximately the same degree of curvature as the interior of the wider portion of aperture 22. Additionally the longer sides of the rectangular cross section of pin 19 are spaced from one another by a distance slightly less than the width of the lowermost part of narrower portion 27 of aperture 22.

As a result of the shapes of the pin 19 and aperture 22, pin 19 is rotatable in the wider portion of aperture 22 and is slidable without rotation in the narrower portion thereof.

Since each hinge pin 19 has rigidly secured thereto one of the barrier members 13, the arrangement permits rotation of each barrier member from an orientation lying substantially parallel to and projecting laterally from support member 11; to an orientation upstanding and substantially perpendicular thereto. From the latter position the pin 19 may be slid upwardly in narrower portion 27 to raise the barrier member 13 associated therewith and lock it, in its upstanding position, against rotation.

In preferred embodiments of the invention, the narrow part 27 of aperture 22 tapers inwardly towards its upper end. Consequently, in such embodiments, the pin 19 becomes an interference fit in portion 27 as it slides upwardly therein. This feature allows the barrier members to be maintained firmly in their upright positions.

The sequence of motion of one of the hinge pins 19, and hence of a barrier member 13 secured thereto, is shown in Figures 3a to 3d.

Releasing of the barrier member 13 to permit collapsing of the stillage 10 is a reverse of the procedure shown in Figures 3a to 3d.

As is visible in the drawings, each hinge sleeve 21 includes adjacent its upper edge an outwardly directed flange 28 that terminates in a downwardly directed skirt 29.

The underside of flange 28 is formed with a concave recess 28a that is suitable for receiving a projection on a further stillage according to the invention, when a pair of the stillages are stacked one above the other with their barrier members 13 upstanding.

The upper end of each barrier member 13 for this reason includes an upwardly extending hoop defined by a bar 31 formed into an n-shape and having its free ends secured as best shown in Figure 2 in recesses 32 formed in the juxtaposed faces 17a, 18a formed in the respective leg members 17, 18. Thus bar 31 rigidly interconnects the leg members 17, 18 at the upper end of each barrier member; and defines the hoop.

The uppermost portion of each bar 31 is substantially straight, and the concave recess 28a in the underside of flange 28 is of approximately the same diameter as that of bar 31.

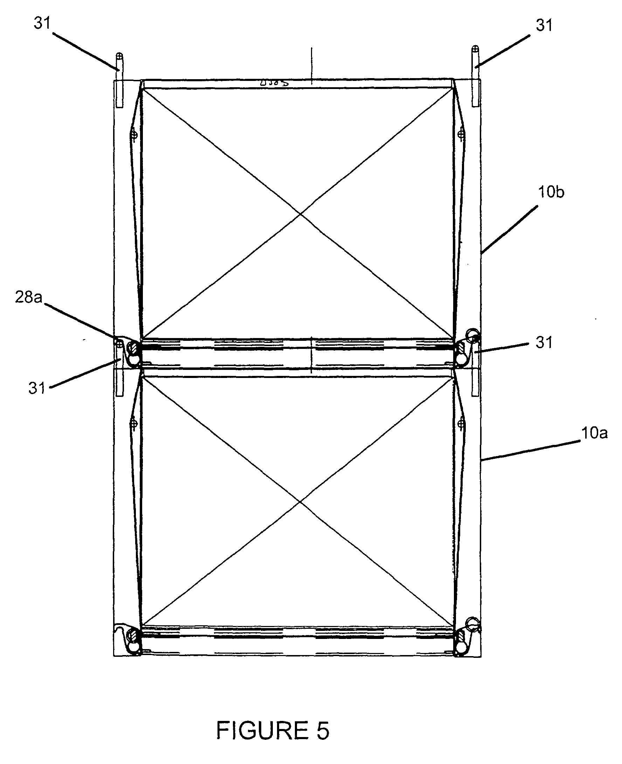

Each bar 31 therefore conveniently locates in a recess 28a when a pair of the stillages 10 are stacked one on top of another. This is illustrated with regard to stillages 10a, 10b in Figure 5.

Since the respective bars 31 are secured at each end to a respective leg member 17, 18, it is possible to raise a stillage 10 including any products supported thereby, by attaching a crane or hoist hook to each hoop defined by the respective bars 31.

As is best shown in Figure 1, each barrier member 13 includes, extending between the respective leg members 17, 18 thereof, a generally horizontally extending bar 33 defining a tensioning member. Each bar 33 is rigidly secured at either end to one of the leg members 17, 18. The bars 33 are each engageable by tension banding applied as described hereinbelow to form a pack including a stillage 10, in order to prevent slackening of the tension banding.

As is best shown by the support member profile visible in Figure 1a, the support surface 12 includes therein a plurality of elongate channels 34 extending along the length of the support member 11.

Each channel 34 is essentially of a T-profile, whereby a profiled resiliently deformable pad in the form of strip 36 having two downwardly protecting limbs 36a, 36b of complementary profile to the channels 34 is securable on the support member 11. This can be achieved eg. by pressing the limbs 36a, 36b into the associated channel 34.

The resiliently deformable strips 36 help to minimise damage to profiles carried by the stillage 10.

As is evident from Figure 2, similar channels 34 extend along the lengths of the confinement surfaces 14 of the leg members 17, 18.

Further resiliently deformable strips 36 may therefore be secured to the confinement surfaces 14 to assist further in minimising damage to profiles carried in the stillage 10.

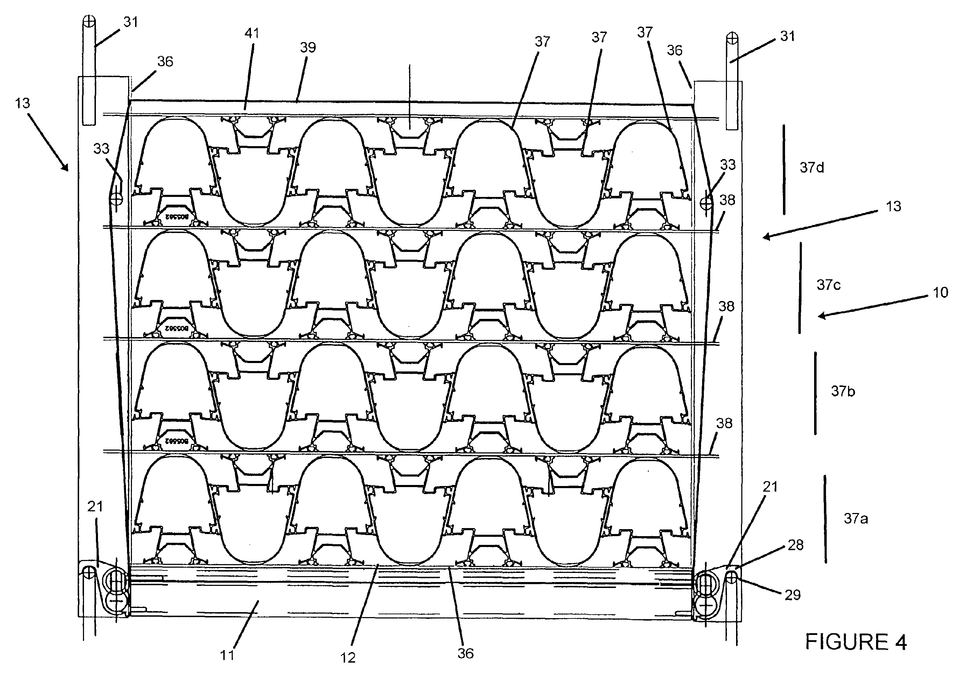

As is best shown in Figure 4, it is possible to construct a pack of elongate, self-supporting profiles 37 using one or more stillages 10 according to the invention.

Typically the pack includes a plurality of the stillages 10, disposed at intervals along the length of the profiles 37. The precise number of the stillages 10 is determined by the length of the profiles 37 and by their flexibility.

The longest aluminium profiles manufactured in the UK are 14 metres long, this being the length of the longest road vehicle trailer available for carrying them. A pack of such profiles may require three or four of the stillages to provide adequate support.

As shown a lowermost layer 37a of the profiles 37 lies on the support surface 12 of each stillage 10, with the resiliently deformable strips 36 preventing scratching of the profiles.

A spacer such as a pallet board 38 permits positioning of a second layer 37b of the profiles 37 above layer 37a.

Further layers 37c, 37d are stacked above layer 37b, with further pallet boards 38 separating the respective layers.

A tension band 39, that may be applied by a *per se* known tension banding machine encircles the pack of profiles 37 and the stillage 10. Tension in the tension band 39 ensures that the profiles 37 are immobile relative to the stillage 10 during transportation, etc.

Tension in the tension band 39 is assured by assured by virtue of the tension band engaging the bars 33, that prevent slackening of the tension band.

The engagement of bar 33 by the tension band 39 also draws the barrier members 13 inwardly slightly against the manufacturing tolerance between the hinge pin 19 and the narrower part 27 of aperture 22. Consequently the resiliently deformable strips 36 extending lengthwise along the barrier members 13 engage the outer edges of the array of profiles 37 to prevent them from moving laterally. The presence of the resiliently deformable strips 36 prevents damage to the outermost profiles as a result of this effect.

The space signified by reference numerals 41 in Figure 4 may if desired be occupied by a rigid panel such as a timber sheet, that helps to rigidify the entire pack following tensioning of band 39.

A method of forming a pack such as that shown in Figure 4 includes the step of erecting a barrier 10 to the configuration shown in Figure 4, from the configuration in which the barrier members 13 occupy their first position substantially parallel to support member 11.

Subsequently the array of profiles 37 may be built up in the region defined by the upstanding barrier members 13. Of course for profiles other than that shown in Figure 4, a different array pattern may be appropriate.

As a final step the pack may optionally be encircled with at least one tension band 39, that may be applied by a *per se* known tension banding machine.

If the timber panel is to lie in the space 41, it is placed there before operation of the tension banding machine.

In practice the method steps would be repeated for each of a plurality of stillages extending along the length of an array of the profiles 37.

Even if during assembly of the pack of Figure 4 one or both of the barrier members 13 drops, its rotation back to its first position can be prevented by virtue of engagement of the tension band 39 with each tensioning member 33.

In practice, however, the dropping of the barrier members 13 is unlikely when the stillage 10 stands on level ground, since the lowermost ends of the barrier members 13 stand on the ground.

On lifting of the pack of Figure 4 by the bar members 31, each barrier member 13 is raised relative to its associated support member 11, with the result that the rectangular hinge pin 19 reengages the narrower part 27 of the keyhole slot 22 to lock the barrier members 13 in their upstanding, second position at all times during suspension of the pack.

As is evident from Figure 3a, when the stillages 10 are empty the barrier members 13 may be released to occupy their first positions substantially parallel to the support member 11. It is then easy to stack a plurality of the stillages one on top of another occupying a minimal amount of space in eg. a transportation vehicle.

## Claims

1. A stillage comprising:
a support having a support surface for supporting articles;
a respective barrier member, defining a confinement surface, moveably secured at either end of the support, each said barrier member being moveable between a first position, in which it lies distant from the other said barrier member; and a second position, in which it is upstanding relative to the support and juxtaposed to the other said barrier member; and
a lock for selectively locking each barrier member in the upstanding position to define a stillage.

2. A stillage according to Claim 1 wherein each said barrier member is secured to the support by a hinge including two mutually engaged hinge members, one of the said hinge members being secured on the support and the other being secured on a said barrier member.

3. A stillage according to Claim 2 wherein the hinge members include a hollow sleeve having a hinge pin therein, the hollow interior of the sleeve being of generally keyhole-shaped cross section; and the cross section of the pin being such as to permit:
(i) its rotation in the wider portion of the keyhole to allow movement of the associated barrier member between the first and second positions; and
(ii) its sliding without rotation in the narrower portion of the keyhole to lock the associated barrier member in its upstanding position.

4. A stillage according to Claim 2 or Claim 3, wherein a portion of each said barrier member adjacent the associated hinge includes two mutually spaced limbs interconnected by a said hinge member.

5. A stillage according to any of Claims 2 to 4 wherein the hinge pin is of generally rectangular cross section, the shorter sides of the rectangle being convexly radiused to permit rotation of the hinge pin in the wider portion of the said keyhole and the separation of the longer sides of the rectangle from one another permitting sliding of the hinge pin without rotation in the narrower portion of the said keyhole.

6. A stillage according to any of Claims 2 to 5 wherein each said hollow sleeve is rigidly secured to the support and each said hinge pin is rigidly secured to a said barrier member.

7. A stillage according to any preceding claim wherein an underside of each hinge sleeve includes a recess for receiving a projection formed on a barrier member of a further said stillage, whereby a plurality of the stillages are stackable one above another when their barrier members are upstanding from the associated support members.

8. A stillage according to any preceding claim wherein each said barrier member includes a projection for engaging a recess formed in the underside of a further said stillage whereby a plurality of the stillages are stackable one above another when their barrier members are upstanding from the associated support members.

9. A stillage according to Claim 8 wherein the projection defined by an elongate member having mutually juxtaposed ends that are secured to a said barrier member.

10. A stillage according to any preceding claim, wherein the support member and the barrier members are shaped to permit stacking of a plurality of the stillages one above another when the barrier members occupy their respective first positions.

11. A stillage according to any preceding claim wherein at least one of the barrier members includes secured thereto a tensioning member for engagement by tension banding during assembly of the stillage into a pack of articles support thereby.

12. A stillage according to any preceding claim wherein the support surface includes secured thereto one or more resiliently deformable members.

13. A stillage according to any preceding claim wherein the confinement surface of a said barrier member includes secured thereto one or more resiliently deformable members.

14. A pack of elongate articles comprising at least one stillage, according to any preceding claim, supporting an array of elongate, self-supporting articles lying adjacent one another, each barrier member of the stillage being locked in its second, upstanding position.

15. A pack according to Claim 14 including a tension band encircling the stillage and the articles supported thereby to secure the stillage and the articles together.

16. A pack according to Claim 15 including a discrete panel interposed between an upper face of the array and the tension band.

17. A pack according to Claim 15 or Claim 16 when dependent from Claim 11, wherein the tension band engages the tensioning member of at least one said barrier member.

18. A method of packing a plurality of elongate, self-supporting articles comprising the steps of:
(i) erecting the barrier members, of a stillage according to any preceding claim, to their second, upstanding position; and
(ii) placing a plurality of said articles between the said barrier members to define an array supported on the support and confined between the barrier members.

19. A method according to Claim 18 including the further step of:
(iii) encircling the stillage and the articles therein with at least one tension band to secure the array and the stillage together.

20. A method according to Claim 19 including the sub-step of interposing a discrete panel between an upper face of the array and the tension band.

21. A method according to Claim 19 or Claim 20 wherein at least one of the barrier members includes secured thereto a tensioning member, the method including the sub-step of engaging the tension band with at least one said tensioning member.
